# FASCICULE DE BREVET EUROPEEN

(11) **EP 1 560 720 B1**
(45) Date de publication et mention de la délivrance du brevet: **30.04.2008**
(21) Numéro de dépôt: 03773674.1
(22) Date de dépôt: 29.10.2003
(51) Int. Cl.: B60C 15/00

(54) **PNEUMATIQUE A MOBILITE ETENDUE AVEC ZONE D'ANCRAGE DECOUPLEE**
LANGZEITREIFEN MIT AUSGERÜCKTEM VERANKERUNGSBEREICH
LONG USE TYRE WITH DISENGAGED ANCHORING AREA

(30) Priorité: 04.11.2002 FR 0213785
(43) Date de publication de la demande: 10.08.2005
(73) Titulaire: Société de Technologie Michelin, 63000 Clermont-Ferrand (FR); Michelin Recherche et Technique S.A., 1463 Granges-Paccot (CH)
(72) Inventeur: GUERINON, Bernard, F-63100 Clermont-Ferrand (FR)
(74) Mandataire: Dequire, Philippe Jean-Marie Denis
(86) Numéro de dépôt international: PCT/EP2003/011993
(87) Numéro de publication internationale: WO 2004/041557

(56) Documents cités:
- WO-A-01/39999
- WO-A-99/64225
- WO-A-02/051653

## Description

La présente invention concerne un pneumatique pour roue de véhicule dans lequel au moins un des bourrelets comporte un siège avec une génératrice dont l'extrémité axialement intérieure est sur un cercle de diamètre supérieur au diamètre du cercle sur lequel se trouve l'extrémité axialement extérieure. Ce type de conception est particulièrement adapté aux nouvelles générations de pneumatiques pouvant être utilisés, dans certaines limites, dans des conditions de faible pression, voire de pression nulle ou quasi-nulle, et comportant un risque moins élevé de désolidarisation du pneu de la jante sur laquelle il est monté. Ce concept est souvent désigné par l'expression "mobilité étendue".

Depuis longtemps les fabricants de pneumatiques tentent de mettre au point un pneumatique ne créant aucune source de risque ou de danger potentiel lors d'un abaissement anormal, voire d'une perte totale de pression. Une des difficultés rencontrées concerne le roulage à plat ou à très faible pression. En effet, lors d'un roulage à très faible pression, voire à pression nulle avec des pneumatiques classiques, les bourrelets risquent fortement de se désolidariser du pourtour de la jante contre lequel ils étaient maintenus par la pression.

De nombreuses solutions ont été testées afin de pallier ces inconvénients. Souvent ces solutions engendrent des difficultés supplémentaires au niveau du montage et du démontage du pneu sur la jante.

Par ailleurs, la fonction serrage du pneumatique sur la jante est une fonction essentielle pour assurer les qualités du pneumatique en fonctionnement. En effet, elle agit directement ou indirectement sur de multiples aspects tels le montage (parfois désigné «clipsage») ou fixation du pneumatique, l'étanchéité du pneumatique, la non rotation sur jante, etc. Ces fonctions sont toutes importantes et nécessitent des caractéristiques spécifiques et une fabrication rigoureuse des produits, en particulier si des standards de qualité élevés sont recherchés. Hors, les jantes et les pneumatiques ont souvent, pour une dimension donnée, des dimensions réelles légèrement différentes, principalement dues aux tolérances de fabrication. Ces variations de dimensions compliquent le respect des différentes fonctions préalablement énumérées.

Pour remplir ces fonctions, on utilise industriellement deux grands types de solutions. Tout d'abord, pour les pneumatiques traditionnels, la tringle assure simultanément toutes ces fonctions.

Plus récemment, pour plusieurs types de produits manufacturés par la demanderesse, la tringle classique est remplacée par une zone d'ancrage comportant notamment des arrangements de fils circonférentiels coopérant avec la structure de renfort de type carcasse via un mélange d'ancrage ou de liaison. Là encore, la zone d'ancrage assure toutes les fonctions présentées ci-dessus.

Dans ces deux cas, il est toutefois difficile d'optimiser certains paramètres, car très souvent, l'amélioration de l'un, se fait au détriment d'un autre. Ce jeu de compromis entre gain d'un côté et pénalisation d'un autre, comporte donc certaines limites, puisqu'il est souvent difficile de tolérer de moins bonnes performances pour certains aspects.

Le document EP 0 582 196 présente un pneumatique comportant une bande de roulement prolongée par deux flancs et deux bourrelets ainsi qu'une carcasse ancrée dans les deux bourrelets à un renforcement annulaire. La carcasse est constituée de fils disposés de façon adjacente, alignés circonférentiellement et en contact avec au moins une couche de gomme de liaison de très haut module d'élasticité dans la zone d'accrochage du bourrelet comprenant le renforcement annulaire. Dans ce pneumatique, le renforcement annulaire de la zone d'accrochage du bourrelet est constitué de piles de fils circonférentiels avec interposition entre les fils de renforcement de la carcasse et ces piles d'une couche de gomme de liaison de très haut module d'élasticité. Ce mode de réalisation est destiné aux pneumatiques de type classique, avec maintien des bourrelets contre le crochet de jante dû à la pression de gonflage du pneumatique. On retrouve dans ce type d'agencement une prédominance d'efforts orientés dans le sens latéral ou axial, induisant d'importantes forces de compression agissant sensiblement axialement depuis les parois vers le centre dudit bourrelet. Ces forces augmentent en fonction de la pression de gonflage. L'augmentation de la pression tend à faire glisser le bourrelet contre le crochet, radialement vers l'extérieur. Les efforts induits radialement vers l'intérieur, contre le siège de la jante , diminuent avec l'augmentation de la pression, ou avec toute augmentation de la tension de la structure de renfort de type carcasse.

On remarque par ailleurs que les piles de fils sont alignées dans un sens sensiblement parallèle à l'orientation du profil du crochet de jante contre lequel le bourrelet s'appuie. Le profil du bourrelet de ce type de pneumatique est relativement étroit et allongé; l'ancrage est réparti sur l'essentiel de la hauteur et de la largeur du bourrelet. Le passage de la carcasse dans le bourrelet est généralement sensiblement central par rapport aux parois dudit bourrelet. Par ailleurs, s'agissant d'un bourrelet relativement étroit sujet à des efforts à prédominance axiale, ni la pression de gonflage, ni la tension induite dans la carcasse ne permettent la génération d'important moments ou couples, tendant à faire pivoter ou tourner le bourrelet sur lui-même.

Avec un tel type de pneumatique, si la pression chute et que le roulage se poursuit, le maintien du pneumatique sur la jante n'est plus assuré, et dans la plupart des cas, il se produit un déjantage.

Le document EP 0 673 324 décrit un ensemble roulant comprenant au moins un pneumatique à armature de carcasse radiale ancrée dans chaque bourrelet et une jante de conformation particulière. Cette jante comporte un premier siège avec une génératrice telle que l'extrémité axialement extérieure de ladite génératrice est distante de l'axe de rotation d'une longueur inférieure à la distance séparant son extrémité axialement intérieure et est délimitée axialement à l'extérieur par une saillie ou rebord de jante. Le pneumatique comporte des sièges de bourrelets adaptés pour un montage sur cette jante. Le type d'interface pneumatique/jante proposé dans ce document présente de nombreux avantages par rapport aux solutions déjà connues, notamment au niveau de la facilité de montage/démontage tout en permettant d'effectuer un certain parcours malgré une chute de pression.

Le document EP 0 748 287 décrit une solution permettant une première optimisation de la technologie de base décrite dans le document EP 0 673 324 préalablement cité. Il s'agit d'un pneumatique dont au moins un bourrelet a une structure permettant de modifier le serrage dudit bourrelet en fonction de la tension de l'armature de carcasse et notamment un renforcement de celui-ci lorsque la pression de gonflage s'accroît jusqu'à sa valeur nominale. Le document propose ainsi l'utilisation d'un bourrelet avec ancrage de l'extrémité de la carcasse par retournement de celle-ci autour de la base de la tringle, par les cotés axialement et radialement intérieurs par rapport à la tringle. Le bourrelet comporte également, adjacent à la tringle et axialement à l'extérieur de celle-ci, un profilé de mélange caoutchouteux de dureté relativement élevée contre lequel la tringle peut venir exercer une force de compression lors d'un accroissement de tension de l'armature de carcasse. Cette force de compression crée un auto-serrage de la pointe du bourrelet sur la jante de montage. La tension de la carcasse entraîne donc un déplacement de la tringle vers l'extérieur, afin que cette dernière génère ladite force de compression. Dans une telle configuration, la présence d'une tringle de type classique et le retournement de la carcasse sous cette dernière sont présentés comme étant indispensables pour générer la force de compression. Ceci limite les possibilités d'envisager d'autres types d'agencement.

D'autre part, le document EP 0 922 592, décrit deux modes de réalisations avec ancrage de la carcasse par retournement de celle-ci axialement vers l'extérieur. Le premier mode propose un ancrage de la carcasse dans le bourrelet par retournement radialement vers l'extérieur de l'extrémité de la carcasse. Le retournement est entouré de part et d'autre par deux couches radialement superposées de fils métalliques disposés axialement côte à côte et couvrant sensiblement toute la portion axiale le long du siège du bourrelet. Les couches sont agencées de façon à être parallèles au siège. Les types de fils ainsi que les dimensions correspondantes sont très précises. La seconde solution proposée dans ce document concerne des sièges de bourrelets avec des diamètres différents. L'arrimage de la carcasse s'effectue également de façon différente par rapport à la première solution. Tout d'abord, la carcasse se subdivise en deux portions radialement séparées au niveau du bourrelet. Chaque portion est adjointe d'une couche de fils disposée radialement, chaque couche étant disposée radialement extérieurement contre chacune des portions de carcasse. La portion de carcasse radialement extérieure et la couche de fils radialement à l'intérieur sont séparées par un insert de type élastomère à dureté élevée prévu dans le bourrelet. Cet insert garnit axialement la portion centrale du bourrelet et remonte radialement vers l'extérieur et axialement vers l'intérieur, au-delà de la limite radiale de présence des fils métalliques.

Les deux exemples de solutions du document EP 0 922 592 comportent plusieurs inconvénients. Ainsi, l'arrimage de la carcasse proposé dans ce document nécessite la présence d'un retournement axialement vers l'extérieur de la portion d'extrémité de la carcasse. D'autre part, les couches de fils superposées sont disposées radialement près du siège du bourrelet, en bonne partie à une position radiale plus près de l'axe de rotation que la portion haute du rebord sur lequel le bourrelet appuie. A moins d'utiliser des fils fortement extensibles, le montage/démontage du pneumatique est difficile à exécuter, dû à la position radiale défavorable des fils. On remarque également que les piles sont orientées de façon sensiblement parallèle au profil du siège contre lequel le bourrelet appuie. Selon la seconde solution, la carcasse se subdivise en deux portions et un insert à dureté élevé est nécessaire pour séparer d'une part les couches de fils et d'autre part les deux portions de carcasse. L'ancrage de la carcasse n'est cependant pas réalisé dans l'insert. La forme de l'insert décrit est limitative.

Le document WO 01/39999, qui est considéré comme l'état de la technique le plus proche, décrit un pneumatique à mobilité étendue dont chacun des bourrelets comporte un siège inversé, une zone d'ancrage, une zone d'appui et une zone de transition. Chacune des zones prises isolément de même que l'ensemble des zones forment en quelque sorte un bourrelet interne susceptible d'effectuer des mouvements relatifs, comme par exemple de type angulaire ou en rotation, par rapport à une autre zone, ou par rapport à un centre de pression CP virtuel, ou par rapport au siège de la jante, etc.

De préférence, ladite zone d'appui est sensiblement allongée. Elle se prolonge par exemple sensiblement le long du siège du bourrelet. Le transfert des efforts lors de la rotation de la zone basse de la portion axialement interne vers la portion axialement externe est ainsi possible, tout en conservant un appui contre au moins une portion du siège du bourrelet. Le transfert des efforts assure un auto-serrage de la pointe du bourrelet contre la jante.

La présente invention propose donc de pallier les différents inconvénients inhérents aux solutions exposées ci-dessus. Elle propose notamment une solution visant à améliorer la stabilité dynamique de la zone d'ancrage.

Pour ce faire, elle prévoit un pneumatique pour roue de véhicule, comprenant:
- deux flancs espacés axialement l'un de l'autre, réunis à leurs portions radialement extérieures par une zone de sommet pourvue sur sa portion radialement extérieure d'une bande de roulement circonférentielle ;
- des bourrelets, disposés radialement intérieurement à chacun des flancs, chaque bourrelet comportant un siège et un rebord externe destinés à venir en contact avec une jante adaptée ;
- une structure de renfort s'étendant sensiblement radialement depuis chacun des bourrelets, le long des flancs, vers la zone sommet ;
- au moins un desdits bourrelets comprenant :
   - un siège de bourrelet comportant une génératrice dont l'extrémité axialement intérieure est sur un cercle de diamètre supérieur au diamètre du cercle sur lequel se trouve l'extrémité axialement extérieure ;
   - une zone d'ancrage de la structure de renfort dans ledit bourrelet, comprenant un arrangement de fils circonférentiels disposés de façon sensiblement adjacente à une portion de la structure de renfort et comprenant au moins deux piles réparties de part et d'autre de la structure de renfort, un mélange de liaison étant disposé entre les fils circonférentiels et la structure de renfort, ladite zone d'ancrage étant agencée dans ledit bourrelet de façon à ce que, à pression normale, les efforts de la structure de renfort se répartissent de façon sensiblement homogène de part et d'autre de ladite structure, dans ladite zone d'ancrage, ladite structure de renfort étant agencée de façon à obtenir une répartition circonférentielle des fils de part et d'autre d'au moins une desdites piles ;
   - une zone d'appui dudit bourrelet s'étendant sensiblement le long du siège de celui-ci ;
   - ledit pneumatique comprenant également une zone latérale extérieure disposée dans la zone du bourrelet prévue pour être disposée entre le crochet de jante et la zone d'ancrage, ladite zone étant meublée par un mélange caoutchoutique de sensiblement haut module.

Une telle configuration permet de répartir de manière optimale les efforts au niveau de la zone d'ancrage, en particulier au niveau de l'arrangement de fils circonférentiels. On évite par exemple d'avoir des écarts importants tant dans la nature que dans le niveau des contraintes subies par les différents fils de l'arrangement, comme par exemple, que certains fils soient sujets à des efforts de tension, alors que d'autres sont sujets à des efforts de compression.

Cette répartition plus uniforme des contraintes est particulièrement avantageuses pour certains types de pneumatiques, notamment ceux dont la hauteur de flanc est importante, comme pour les véhicules de type « SUV ».

En outre, l'agencement spécifique des fils de la structure de renfort de type carcasse de façon à obtenir plus d'une position axiale de ces fils dans la zone d'ancrage, contribue à répartir les efforts à différentes locations. Dans les exemples illustrés, on retrouve de préférence deux positions axialement espacées dans lesquelles on retrouve les portions axialement intérieures et axialement extérieures de structure de renfort de type carcasse. On obtient de la sorte un moyen de réglage supplémentaire permettant de réaliser des agencements dans lesquels on tend le plus possible vers un équilibre ou uniformité des contraintes. Les bénéfices obtenus en terme de durabilité et de fiabilité peuvent être considérables.

Les fils d'au moins une pile de fils circonférentiels se trouvent en conséquences « entourés », puisque certains fils de la structure de renfort de type carcasse sont axialement extérieurs par rapport à ladite pile, tandis que d'autres sont axialement intérieurs par rapport à ladite pile, de préférence en alternance régulière le long de la circonférence du pneumatique. Il peut s'agir d'une alternance à chaque fil, à tous les deux fils, trois fils, ou même plus.

De manière avantageuse, la zone latérale extérieure est prévue dans la portion axialement externe du bourrelet et s'étend entre la portion adjacente au crochet de jante et la zone d'ancrage. Elle coopère avantageusement avec la zone d'ancrage, ce qui permet une meilleure action mécanique entre ladite zone d'ancrage et la portion du bourrelet adjacente au crochet de jante.

Cette zone permet d'augmenter la pression de serrage, notamment dans la région du crochet de jante. Grâce à sa déformabilité réduite, elle permet de limiter la tendance du bourrelet à glisser radialement extérieurement au-delà du crochet de jante. Elle contribue par ailleurs d'une part à inhiber toute tendance à générer un moment de rotation, et d'autre part à établir une stabilité dynamique, comme par exemple lors de virages ou de sollicitations latérales importantes.

Selon un mode de réalisation avantageux, le pneumatique comporte une structure de renfort de type carcasse unique dont les fils sont découplés, c'est-à-dire disposés en alternance circonférentielle, axialement intérieurement et axialement extérieurement par rapport à ladite au moins une pile. Il s'agit d'un mode de réalisation particulièrement avantageux, économique et simple pour les pneumatiques dont la charge est limitée.

Selon un autre mode de réalisation avantageux, le pneumatique comporte deux structures de renfort de type carcasse dont les fils de la première sont disposés axialement intérieurement et les fils de la seconde sont disposés axialement extérieurement par rapport à ladite au moins une pile. Ce mode de réalisation se prête particulièrement pour les pneumatiques susceptibles de supporter une charge plus importante. Il est alors d'autant plus important de veiller à ce que la répartition des efforts soit optimale. En effet, avec des charges plus élevées, tout déséquilibre dans la répartition des contraintes peut considérablement affecter l'endurance et la durabilité.

Selon l'une ou l'autre des formes de réalisation précédentes, plusieurs piles de fils circonférentiels peuvent avantageusement être disposées entre les portions axialement intérieures et axialement extérieures de structure de renfort de type carcasse.

Selon une variante de réalisation avantageuse du pneumatique selon l'invention, entre des valeurs correspondant sensiblement à une pression nulle et une pression normale de fonctionnement, la répartition de pression le long de la zone d'appui est sensiblement indépendante de ladite valeur de la pression.

Lors du gonflage du pneumatique, les effets induits sur la répartition des efforts le long de l'interface entre la zone d'appui et le siège de la jante n'affecte pas de manière importante ladite répartition. On obtient une stabilité par rapport à la dynamique de gonflage qui permet de mieux garantir un bon serrage sur jante, quelle que soit la condition et indépendamment des tolérances. Les contraintes internes, en particulier au niveau du bourrelet du pneumatique, sont dynamiquement stables, contribuant à la pérennité du produit. La stabilité dynamique permet aussi d'éviter l'apparition de contraintes parasites au niveau du bourrelet, comme par exemple des contraintes susceptibles d'affecter les propriétés ou les qualités du produit. Par ailleurs, la sensibilité aux variations de tolérances de l'assemblage jante/pneumatique est réduite.

De manière avantageuse, les dits efforts de la structure de renfort engendrent une pression de serrage du bourrelet sensiblement symétrique, ou faiblement asymétrique de part et d'autre de la structure de renfort.

Une telle configuration permet de tendre vers l'obtention d'une pression de serrage sensiblement uniforme le long du siège du bourrelet. Les propriétés/qualités énoncées ci-dessus sont ainsi encore optimisées. En absence de déséquilibres importants, on obtient une excellente stabilité de montage et une durabilité accrue.

La zone d'ancrage est avantageusement à proximité immédiate du centre d'inertie du bourrelet. Cela permet de minimiser la tendance du bourrelet à tourner sur lui-même ; on diminue de ce fait une source importante de déséquilibres des contraintes. Selon un exemple de réalisation avantageux, le centre d'inertie se situe dans la zone d'ancrage, de préférence à proximité immédiate (ou même confondu) de la structure de renfort.

La zone d'ancrage ne comporte pas de tringle, notamment de tringle de type traditionnel, comme par exemple une tringle multifilaire contre laquelle une nappe carcasse est retournée, de façon à ce que la zone de coopération entre la portion retournée de nappe et la tringle procure le maintien de la nappe carcasse.

La structure de renfort des flancs et du sommet est avantageusement de type carcasse, ses propriétés mécaniques s'apparentant à celles des nappes carcasses de type connu.

La zone d'appui est de préférence destinée à être en contact avec le siège de jante.

De manière préférentielle, la zone d'appui est sensiblement constituée d'un mélange de gomme à haut module. La présence d'une zone de gomme à haut module dans une portion radialement interne par rapport au rebord procure un bon maintien axial et évite que le bourrelet glisse axialement vers l'extérieur.

Selon un mode de fabrication particulièrement avantageux où les différents constituants du pneumatique sont disposés directement sur un noyau central dont la forme confère au pneumatique en cours de fabrication une forme sensiblement similaire à la forme du produit fini, la suppression du retournement (qui existe avec une architecture traditionnelle) permet une simplification avantageuse de la fabrication.

Selon une forme d'exécution avantageuse de l'invention, les bases des piles (les fils radialement les plus près de l'axe de rotation du pneumatique) sont disposées radialement plus à l'extérieur que l'extrémité dudit rebord (portion axialement et radialement la plus à l'extérieur dudit rebord). Les bases des piles sont avantageusement prévues de façon à être disposées radialement extérieurement par rapport au rebord de la jante adaptée au pneumatique. Les opérations de montage/démontage sont alors facilitées.

De manière avantageuse, la structure de renfort de type carcasse s'étend sensiblement radialement depuis chacun des bourrelets, le long des flancs, vers la zone sommet. Ladite structure peut ainsi être unitaire et s'étendre d'un bourrelet à l'autre, ou encore être partagée en deux demi-structures, s'étendant chacune le long d'un seul flanc.

Le nombre de piles ainsi que le nombre d'enroulements ou de spires de chacune des piles est avantageusement établi en fonction des caractéristiques recherchées pour le pneumatique, par exemple sa pression de service. Par exemple, un nombre de piles plus élevé peut être souhaité afin d'augmenter la rigidité au niveau de la zone du bourrelet.

La structure de renfort de type carcasse est de préférence constituée d'un enroulement filaire faisant des aller-retours entre les deux bourrelets en formant dans chacun des bourrelets des boucles. Par ailleurs, l'enroulement filaire est préférablement constitué d'un seul fil.

D'autres caractéristiques et avantages de l'invention apparaîtront à la lecture des exemples de réalisation du pneumatique conforme à l'invention, donnés à titre non limitatif et en se référant aux figures 1 à 5 annexées, dans lesquelles:
la figure 1 illustre, en coupe transversale, un pneumatique selon l'invention;
la figure 2 illustre, en coupe transversale agrandie, un bourrelet d'une première variante d'un pneumatique selon l'invention;
la figure 3 illustre, en coupe transversale agrandie, un bourrelet d'une seconde variante d'un pneumatique selon l'invention;
la figure 4 illustre, en coupe transversale agrandie, un bourrelet d'une autre variante d'un pneumatique selon l'invention;
la figure 5 illustre, en coupe transversale agrandie, un bourrelet d'une autre variante d'un pneumatique selon l'invention;

L'armature de renforcement ou renforcement des pneumatiques est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Cependant, il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les fils des différentes structures de renfort sont appliqués directement sur les couches adjacentes de mélanges caoutchoutiques, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchoutiques et les renforts sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des filaments circonférentiels, le tout étant noyé dans un mélange caoutchoutique d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou de renforts sous forme de filaments.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les fils de renforts d'une nappe carcasse dans le procédé classique, et les fils correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les filaments circonférentiels, le mélange caoutchoutique et les portions adjacentes de renfort de flanc d'une zone basse réalisée avec un procédé avec application sur un noyau toroïdal.

Dans la présente description, le terme "fil" désigne en toute généralité aussi bien des monofilaments que des multifilaments ou des assemblages comme des câbles, des retors ou encore tout type d'assemblage équivalent, et ceci, quels que soient la matière et le traitement de ces fils. Il peut s'agir par exemple de traitements de surface, enrobage ou pré-encollage pour favoriser l'adhérence sur le caoutchouc. L'expression « fil unitaire » désigne un fil composé d'un seul élément, sans assemblage. Le terme « multifilaments » désigne au contraire un assemblage d'au moins deux éléments unitaires pour former un câble, un retors, etc.

D'autre part, on entend par structure radiale, un agencement à 90 degrés, mais aussi, selon l'usage, à un angle proche de 90°.

On sait que, de façon traditionnelle, la ou les nappes de carcasse sont retournées autour d'une tringle. La tringle remplit alors une fonction d'ancrage de la carcasse. Ainsi, notamment, elle supporte la tension se développant dans les fils de carcasse par exemple sous l'effet de la pression de gonflage. L'agencement décrit dans le présent document permet d'assurer une fonction similaire d'ancrage. Il est également connu d'utiliser la tringle de type traditionnel pour assurer une fonction de serrage du bourrelet sur une jante. L'agencement décrit dans le présent document permet également d'assurer un rôle similaire de serrage.

Dans la présente description, on entend par gomme ou mélange de « liaison », le mélange caoutchoutique éventuellement en contact avec les fils de renforcement, adhérant à ceux-ci et susceptible de remplir les interstices entre fils adjacents.

On entend par "contact" entre un fil et une couche de gomme de liaison le fait qu'au moins une partie du contour extérieur du fil est en contact intime avec le mélange caoutchoutique constituant de la gomme de liaison.

On désigne "flancs" les portions du pneumatique le plus souvent de faible rigidité de flexion situées entre le sommet et les bourrelets. On appelle "mélange flancs" les mélanges caoutchoutiques situés axialement extérieurement relativement aux fils de la structure de renforcement de la carcasse et à leur gomme de liaison. Ces mélanges ont habituellement un bas module d'élasticité.

On appelle "bourrelet" la portion du pneumatique adjacente radialement intérieurement au flanc.

On entend par "module d'élasticité" d'un mélange caoutchoutique, un module d'extension sécant obtenu à une déformation d'extension uniaxiale de l'ordre de 10% à température ambiante.

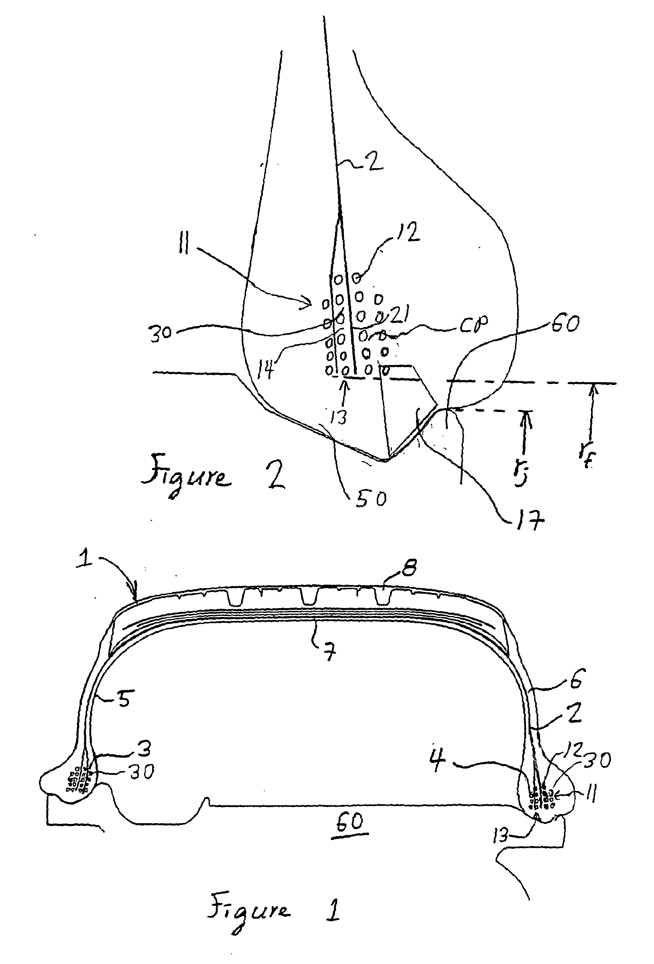

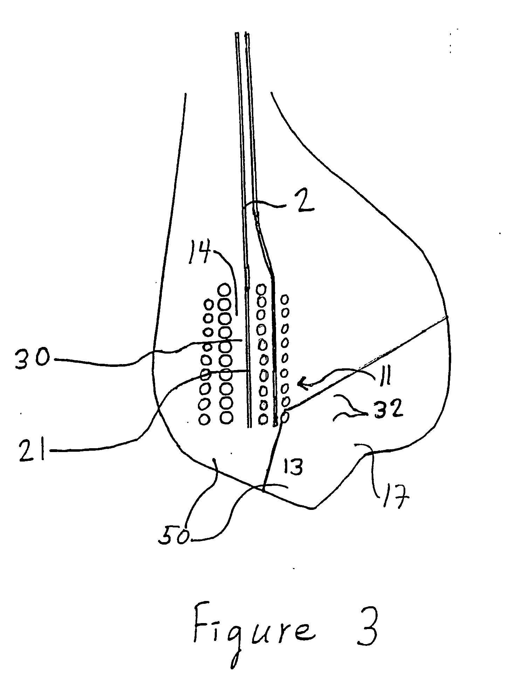

On entend par « pile » une superposition sensiblement radiale de fils ou de tours d'un seul fil lorsque le bourrelet est vu en coupe dans le plan diamétral comme sur les figures 2 ou 3.

La figure 1 illustre, en coupe transversale, un pneumatique 1 selon l'invention. Ce pneumatique comprend un premier flanc 5 adjacent à un premier bourrelet 3 correspondant de préférence au bourrelet intérieur. De façon similaire, la portion opposée du pneumatique comprend un second flanc 6 adjacent à un second bourrelet 4. Un sommet 7, sur lequel est prévue une bande de roulement 8, assure la jonction entre les flancs. Le sommet comporte de préférence au moins une ceinture de renfort.

Le pneumatique comporte une structure de renfort de type carcasse 2, pourvue de renforts avantageusement configurés selon un agencement sensiblement radial. Cette structure peut être agencée de façon continue d'un bourrelet à l'autre, en passant par les flancs et le sommet, ou encore, elle peut comporter deux ou plusieurs parties, agencées par exemple le long des flancs, sans couvrir la totalité du sommet.

Les portions d'extrémité 21 de la structure de renfort 2 sont situées dans les bourrelets.

Le bourrelet comporte par ailleurs une zone d'ancrage 30 sensiblement circonférentielle et comprenant un arrangement 11 de fils circonférentiels 12 disposés de façon sensiblement adjacente à la portion d'extrémité 21 de la structure de renfort. Un mélange de liaison 14 (ou d'ancrage) est interposé entre les fils circonférentiels 12 et la structure de renfort 21.

Les arrangements 11 de fils 12 peuvent être agencés et fabriqués de diverses façons. Par exemple, une pile 13 peut avantageusement être constituée d'un seul fil 12, enroulé (sensiblement à zéro degrés) en spirale, de préférence depuis le plus petit diamètre vers le plus grand diamètre. Une pile peut également être constituée de plusieurs fils concentriques posés l'un dans l'autre.

La structure de renfort 2 peut être réalisée par enroulement d'un seul fil faisant des aller-retours entre les deux bourrelets en formant dans chacun des bourrelets des boucles. Ces boucles, enrobées dans le mélange caoutchoutique, contribuent à la liaison mécanique entre la structure de renfort 2 et le bourrelet, notamment les piles 13. Par la présence de boucles entre le parcours "aller" et le "retour" du fil, on voit que le renforcement est de type monofilament. Bien entendu, la structure de renfort pourrait ne pas être fabriquée de façon continue à partir d'un seul fil, et il pourrait ne pas y avoir de boucles, mais par exemple des extrémités libres.

Les figures 2, 3 et 4 illustrent des exemples de bourrelets dont les zones d'ancrages 30 sont agencées dans ledit bourrelet de façon à ce que, à pression normale, les efforts de la structure de renfort se répartissent de façon sensiblement homogène de part et d'autre de ladite structure, dans ladite zone d'ancrage.

Il s'agit d'une structure sensiblement insensible aux variations de pression puisque lors du gonflage du pneumatique, entre des valeurs de pression nulle et une pression normale de fonctionnement ou de service (comme par exemple entre 1.5 et 3 bars pour un véhicule de type tourisme, et plus particulièrement entre 1.8 et 2.5 bars), la répartition de pression le long de la zone d'appui reste similaire.

Une telle stabilité dynamique peut avantageusement être obtenue par une disposition optimalisée des éléments d'ancrage, notamment des fils circonférentiels 12 qui sont dans ces exemples répartis de façon asymétrique de part et d'autre de la structure de renfort. D'autre part, les portions d'extrémité 21 de la structure de renfort de type carcasse sont conformées par un agencement en alternance de certains fils axialement disposés vers l'intérieur du bourrelet, et d'autres fils axialement disposés vers l'extérieur du bourrelet. Il peut s'agir d'une alternance sur la base d'un seul, de deux, ou même de plusieurs fils, disposés une fois d'un côté, puis de l'autre, en alternance, en se déplaçant le long de la circonférence du pneumatique.

L'alternance peut également s'effectuer à partir de plusieurs configurations de base de la structure de renfort de type carcasse. Tout d'abord, tel qu'illustré aux figures 1 et 2, le pneumatique comprend une seule structure de renfort de type carcasse: au niveau du bourrelet, celle-ci se scinde en deux portions séparées axialement, et comportant au moins une pile 13 de fils circonférentiels 12 entre les deux portions.

A la figure 3, le pneumatique comporte deux structures de renfort de type carcasse: au niveau du bourrelet, la portion d'extrémité de chacune de ces structures forme une portion 21, l'une axialement intérieure et l'autre axialement extérieure, l'une par rapport à l'autre.

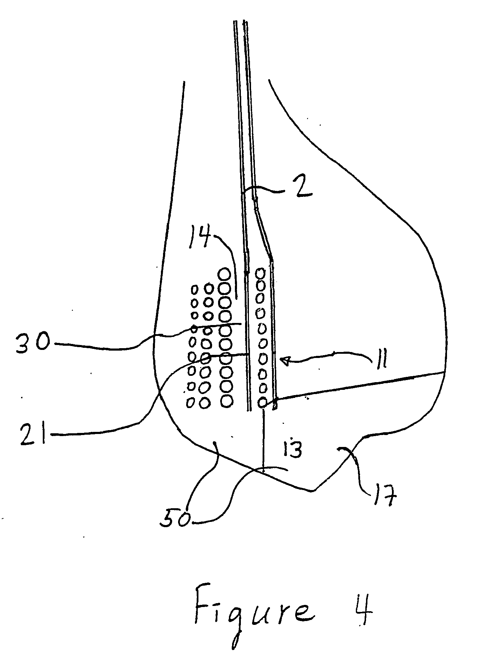

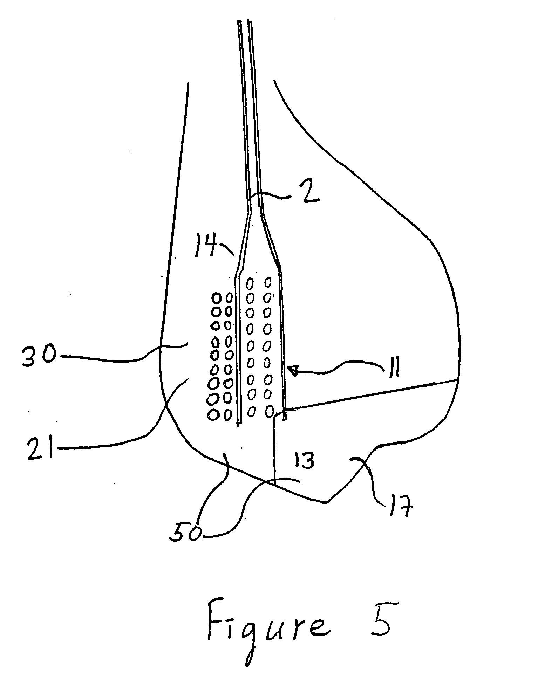

Les figures 3 à 5 illustrent des variantes dans lesquelles les agencements des piles varient. Par exemple, aux figures 3 et 4, une seule pile est disposée entre les portions 21, tandis qu'à la figure 5, on retrouve 2 piles. A la figure 3, on retrouve une pile axialement extérieure par rapport à la structure de renfort de type carcasse, tandis qu'aucune pile n'occupe une telle position dans les exemples des figures 4 et 5.

Il est à noter que les dispositions des piles des exemples des figures 3 à 5, pourraient être associées à un agencement avec une seule structure de renfort de type carcasse. De façon similaire, l'agencement de la figure 1, pourrait être associé à une structure de renfort de type carcasse double. Le nombre de piles axialement intérieures par rapport structure de renfort de type carcasse peut varier de un à trois piles ou même plus, tel qu'illustré dans les différents exemples. Il en est de même pour le nombre de piles axialement extérieures par rapport à la structure de renfort de type carcasse. Le nombre total de piles est de deux ou plus, et de préférence de quatre. Leur répartition tient favorablement compte des contraintes mécaniques du pneumatique et de la zone du bourrelet en particulier, que l'on souhaite réparties de façon la plus homogène possible.

La zone d'ancrage est avantageusement prévue à proximité immédiate du centre d'inertie CP du bourrelet.

Dans les exemples de réalisation illustrés aux figures 2, 3, 4 et 5 le bourrelet comporte également une zone d'appui 50, disposée sensiblement entre la zone d'ancrage et le siège du bourrelet, sensiblement alignée axialement avec ces zones, ladite zone étant adaptée pour une mise en compression lors du montage du pneumatique sur une jante adaptée. Cette mise en compression contribue à assurer le serrage du pneumatique, en transmettant l'effort de serrage produit par la zone de serrage. Le mélange caoutchoutique de cette zone est sélectionné de façon à procurer une bonne résistance au fluage, afin d'assurer la pérennité des caractéristiques de serrage.

La portion du bourrelet entre la partie adjacente au rebord ou crochet 60 de jante et la zone d'ancrage comprend une zone latérale extérieure 17 ou zone d'arrêt occupée ou constituée de préférence par un mélange caoutchoutique de haut module, par exemple compris entre 10 et 40 Mpa.

Cette zone permet d'augmenter la pression de serrage, notamment dans la région du crochet de jante en transmettant les efforts de la zone d'ancrage vers ledit crochet. Grâce à sa déformabilité réduite, elle permet de limiter la tendance du bourrelet à glisser radialement extérieurement au-delà du crochet de jante. Elle contribue par ailleurs d'une part à inhiber toute tendance à générer un moment de rotation, et d'autre part à établir une stabilité dynamique, comme par exemple lors de virages ou de sollicitations latérales importantes.

De manière avantageuse, la zone latérale extérieure 17 est prévue dans la portion axialement externe du bourrelet et s'étend entre la portion adjacente au crochet de jante et la zone d'ancrage. Elle comporte une portion adjacente à la zone d'ancrage, ce qui permet une meilleure action mécanique entre ladite zone d'ancrage et la portion du bourrelet adjacente au crochet de jante.

Le pneumatique selon l'invention est particulièrement adapté pour être utilisé sur une jante du type de celle décrite dans le document EP 0 673 324. Une telle jante comporte un siège et de préférence un rehaussement ou rebord situé axialement et radialement vers l'extérieur.

Les bases des piles (les fils radialement les plus près de l'axe de rotation du pneumatique) sont de préférence disposées radialement plus à l'extérieur que l'extrémité dudit rebord (portion axialement et radialement la plus à l'extérieur dudit rebord) tel qu'illustré par exemple à la figure 2. Les bases des piles sont avantageusement prévues de façon à être disposées radialement extérieurement par rapport au rebord de la jante 60 (ou crochet de jante) adaptée au pneumatique. Les opérations de montage/démontage sont alors facilitées. Ainsi, à la figure 2, on constate que r_{f} (rayon des premiers fils) est supérieur à rⱼ (rayon du rebord ou crochet de jante). Ce rayon correspond à la distance depuis l'axe de rotation.

Les différents exemples de réalisations décrites et/ou illustrées peuvent avantageusement être réalisées avec des dispositifs du type de ceux décrits dans le document EP 0 580 055.

Ainsi par exemple, il est très avantageux de confectionner le pneumatique sur un noyau central imposant la forme de sa cavité intérieure. On applique sur ce noyau, de préférence dans l'ordre requis par l'architecture finale, tous les constituants du pneumatique, qui sont disposés directement à leur place finale, selon un profil sensiblement final. Dans ce cas, un tel pneumatique peut être moulé et vulcanisé comme exposé dans le document US 4 895 692.

## Revendications

1. Pneumatique pour roue de véhicule, comprenant:
- deux flancs espacés axialement l'un de l'autre, réunis à leurs portions radialement extérieures par une zone de sommet pourvue sur sa portion radialement extérieure d'une bande de roulement circonférentielle ;
- des bourrelets, disposés radialement intérieurement à chacun des flancs, chaque bourrelet comportant un siège et un rebord externe destinés à venir en contact avec une jante adaptée ;
- une structure de renfort s'étendant sensiblement radialement depuis chacun des bourrelets, le long des flancs, vers la zone sommet ;
- au moins un desdits bourrelets comprenant :
- un siège de bourrelet comportant une génératrice dont l'extrémité axialement intérieure est sur un cercle de diamètre supérieur au diamètre du cercle sur lequel se trouve l'extrémité axialement extérieure ;
- une zone d'appui dudit bourrelet s'étendant sensiblement le long du siège de celui-ci;
- une zone d'ancrage de la structure de renfort dans ledit bourrelet, comprenant un arrangement de fils circonférentiels disposés de façon sensiblement adjacente à une portion de la structure de renfort et comprenant au moins deux piles réparties de part et d'autre de la structure de renfort, un mélange de liaison étant disposé entre les fils circonférentiels et la structure de renfort, ladite zone d'ancrage étant agencée dans ledit bourrelet de façon à ce que, à pression normale, les efforts de la structure de renfort se répartissent de façon sensiblement homogène de part et d'autre de ladite structure, dans ladite zone d'ancrage, **caractérisé en ce que** ladite structure de renfort est agencée de façon à obtenir une répartition circonférentielle des fils de part et d'autre d'au moins une desdites piles ;
- ledit pneumatique comprend également une zone latérale extérieure disposée dans la zone du bourrelet prévue pour être disposée entre le crochet de jante et la zone d'ancrage, ladite zone étant meublée par un mélange caoutchoutique de sensiblement haut module.

2. Pneumatique pour roue de véhicule selon la revendication 1, dans lequel la zone latérale extérieure est prévue dans la portion axialement externe du bourrelet et s'étend entre la portion adjacente au crochet de jante et la zone d'ancrage.

3. Pneumatique pour roue de véhicule selon l'une des revendications 1 ou 2, dans lequel la zone latérale extérieure coopère avec la zone d'ancrage.

4. Pneumatique pour roue de véhicule selon l'une des revendications 1 à 3, comportant une structure de renfort de type carcasse unique dont les fils sont disposés en alternance circonférentielle, axialement intérieurement et axialement extérieurement par rapport à ladite au moins une pile.

5. Pneumatique pour roue de véhicule selon la revendication 1 à 3, comportant deux structures de renfort de type carcasse dont les fils de la première sont disposés axialement intérieurement et les fils de la seconde sont disposés axialement extérieurement par rapport à ladite au moins une pile.

6. Pneumatique pour roue de véhicule selon l'une des revendications précédentes, dans lequel plusieurs piles de fils circonférentiels sont disposées entre les portions axialement intérieures et axialement extérieures de structure de renfort de type carcasse.

7. Pneumatique pour roue de véhicule selon l'une des revendication précédentes, dans lequel, entre des valeurs correspondant sensiblement à une pression nulle et une pression normale de fonctionnement, la répartition de pression le long de la zone d'appui est sensiblement indépendante de ladite valeur de la pression.

8. Pneumatique pour roue de véhicule selon l'une des revendications précédentes, dans lequel les dits efforts engendrent une pression de serrage du bourrelet sensiblement symétrique, ou faiblement asymétrique de part et d'autre de la structure de renfort.

9. Pneumatique pour roue de véhicule selon l'une des revendications précédentes, dans lequel la zone d'ancrage est à proximité immédiate du centre d'inertie du bourrelet.

## Claims

1. A tyre for a vehicle wheel, comprising:
- two sidewalls spaced apart axially from each other, joined at their radially outer portions by a crown zone provided on its radially outer portion with a circumferential tread;
- beads, arranged radially to the inside of each of the sidewalls, each bead comprising a seat and an outer flange which are intended to come into contact with a suitable rim;
- a reinforcement structure extending substantially radially from each of the beads, along the sidewalls, towards the crown zone;
- at least one of said beads comprising:
- a bead seat comprising a generatrix the axially inner end of which is located on a circle of diameter greater than the diameter of the circle on which the axially outer end is located;
- a bearing zone for said bead extending substantially along the seat of the latter;
- an anchoring zone for the reinforcement structure in said bead, comprising an arrangement of circumferential threads arranged substantially adjacent to a portion of the reinforcement structure and comprising at least two stacks distributed on either side of the reinforcement structure, a bonding mix being arranged between the circumferential threads and the reinforcement structure, said anchoring zone being arranged in said bead in such a manner that, at normal pressure, the forces of the reinforcement structure are distributed substantially homogeneously on either side of said structure, in said anchoring zone,
**characterised in that** said reinforcement structure is arranged so as to obtain a circumferential distribution of the threads on either side of at least one of said stacks and **in that** said tyre also comprises an external lateral zone arranged in the zone of the bead provided to be arranged between the rim hook and the anchoring zone, said zone being filled by a rubber mix of substantially high modulus.

2. A tyre for a vehicle wheel according to Claim 1, in which the external lateral zone is provided in the axially outer portion of the bead and extends between the portion adjacent to the rim hook and the anchoring zone.

3. A tyre for a vehicle wheel according to one of Claims 1 or 2, in which the external lateral zone cooperates with the anchoring zone.

4. A tyre for a vehicle wheel according to one of Claims 1 to 3, comprising a single carcass-type reinforcement structure the threads of which are arranged circumferentially alternating, axially internally and axially externally relative to said at least one stack.

5. A tyre for a vehicle wheel according to Claims 1 to 3, comprising two carcass-type reinforcement structures the threads of the first of which are arranged axially internally and the threads of the second of which are arranged axially externally relative to said at least one stack.

6. A tyre for a vehicle wheel according to one of the preceding claims, in which several stacks of circumferential threads are arranged between the axially inner and axially outer portions of the carcass-type reinforcement structure.

7. A tyre for a vehicle wheel according to one of the preceding claims, in which, between values corresponding substantially to a zero pressure and a normal operating pressure, the distribution of pressure along the bearing zone is substantially independent of said pressure value.

8. A tyre for a vehicle wheel according to one of the preceding claims, in which said forces cause a clamping pressure of the bead which is substantially symmetrical, or slightly asymmetrical on either side of the reinforcement structure.

9. A tyre for a vehicle wheel according to one of the preceding claims, in which the anchoring zone is in the immediate proximity of the centre of inertia of the bead.

## Patentansprüche

1. Luftreifen für ein Fahrzeugrad, der aufweist:
- zwei Flanken mit axialem Abstand zueinander, die an ihren radial äußeren Abschnitten durch eine Scheitelzone vereint sind, die in ihrem radial äußeren Abschnitt mit einer Umfangslauffläche versehen ist;
- Wülste, die radial innen bezüglich jeder der Flanken vorgesehen sind, wobei jeder Wulst einen Sitz und einen äußeren Rand aufweist, die dazu bestimmt sind, mit einer geeigneten Felge in Kontakt zu kommen;
- eine Verstärkungsstruktur, die sich im Wesentlichen radial von jedem der Wülste entlang der Flanken zur Scheitelzone erstreckt;
- wobei mindestens einer der Wülste aufweist:
- einen Wulstsitz mit einer Mantellinie, deren axial inneres Ende sich auf einem Kreis mit einem größeren Durchmesser als der Durchmesser des Kreises befindet, auf dem sich das axial äußere Ende befindet;
- eine Auflagezone des Wulsts, die sich im Wesentlichen entlang von dessen Sitz erstreckt;
- eine Verankerungszone der Verstärkungsstruktur im Wulst, die eine Anordnung von Umfangsfäden aufweist, die im Wesentlichen einem Abschnitt der Verstärkungsstruktur benachbart angeordnet sind, und die mindestens zwei Stapel aufweist, die zu beiden Seiten der Verstärkungsstruktur verteilt sind, wobei eine Verbindungsmischung zwischen den Umfangsfäden und der Verstärkungsstruktur angeordnet ist, wobei die Verankerungszone derart im Wulst angeordnet ist, dass bei Betriebsdruck die Kräfte der Verstärkungsstruktur sich im Wesentlichen homogen zu beiden Seiten der Struktur in der Verankerungszone verteilen,
**dadurch gekennzeichnet, dass**
- die Verstärkungsstruktur so angeordnet ist, dass eine Umfangsverteilung der Fäden zu beiden Seiten mindestens eines der Stapel erhalten wird;
- der Luftreifen ebenfalls eine äußere seitliche Zone aufweist, die in der Zone des Wulsts angeordnet ist, die vorgesehen ist, um zwischen dem Felgenhorn und der Verankerungszone angeordnet zu werden, wobei diese Zone mit einer Kautschukmischung mit im Wesentlichen hohem Modul gefüllt ist.

2. Luftreifen für ein Fahrzeugrad nach Anspruch 1, bei dem die äußere seitliche Zone im axial äußeren Abschnitt des Wulsts vorgesehen ist und sich zwischen dem dem Felgenhorn benachbarten Abschnitt und der Verankerungszone erstreckt.

3. Luftreifen für ein Fahrzeugrad nach einem der Ansprüche 1 oder 2, bei dem die äußere seitliche Zone mit der Verankerungszone zusammenwirkt.

4. Luftreifen für ein Fahrzeugrad nach einem der Ansprüche 1 bis 3, der eine Verstärkungsstruktur vom Typ einzige Karkasse aufweist, deren Fäden in Umfangsrichtung abwechselnd axial innen und axial außen bezüglich des mindestens einen Stapels angeordnet sind.

5. Luftreifen für ein Fahrzeugrad nach Anspruch 1 bis 3, der zwei Verstärkungsstrukturen vom Typ Karkasse aufweist, bei denen die Fäden der ersten axial innen und die Fäden der zweiten axial außen bezüglich des mindestens einen Stapels angeordnet sind.

6. Luftreifen für ein Fahrzeugrad nach einem der vorhergehenden Ansprüche, bei dem mehrere Stapel von Umfangsfäden zwischen den axial inneren und axial äußeren Abschnitten einer Verstärkungsstruktur vom Typ Karkasse angeordnet sind.

7. Luftreifen für ein Fahrzeugrad nach einem der vorhergehenden Ansprüche, bei dem zwischen Werten, die im Wesentlichen einem Nulldruck und einem normalen Betriebsdruck entsprechen, die Druckverteilung entlang der Auflagezone im Wesentlichen unabhängig vom Wert des Drucks ist.

8. Luftreifen für ein Fahrzeugrad nach einem der vorhergehenden Ansprüche, bei dem die Kräfte einen im Wesentlichen symmetrischen oder schwach unsymmetrischen Klemmdruck des Wulsts zu beiden Seiten der Verstärkungsstruktur erzeugen.

9. Luftreifen für ein Fahrzeugrad nach einem der vorhergehenden Ansprüche, bei dem die Verankerungszone sich in unmittelbarer Nähe des Trägheitszentrums des Wulsts befindet.
